(19) Europäisches Patentamt
European Patent Office
Office européen des brevets

(11) **EP 2 793 354 A1**

(12) **EUROPEAN PATENT APPLICATION**
published in accordance with Art. 153(4) EPC

(43) Date of publication:
**22.10.2014 Bulletin 2014/43**

(51) Int Cl.:
***H02J 17/00*** *(2006.01)*

(21) Application number: **11877298.7**

(22) Date of filing: **12.12.2011**

(86) International application number:
**PCT/JP2011/078659**

(87) International publication number:
**WO 2013/088488 (20.06.2013 Gazette 2013/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Toyota Jidosha Kabushiki Kaisha Toyota-shi, Aichi 471-8571 (JP)**

(72) Inventors:
• **YOSHI, Satoshi**
  **Toyota-shi**
  **Aichi 471-8571 (JP)**

• **TANAKA, Junichi**
  **Toyota-shi**
  **Aichi 471-8571 (JP)**

(74) Representative: **Intès, Didier Gérard André et al Cabinet Beau de Loménie**
  **158, rue de l'Université**
  **75340 Paris Cedex 07 (FR)**

(54) **NON-CONTACT ELECTRICAL TRANSMISSION AND RECEPTION SYSTEM, VEHICLE, AND ELECTRICAL TRANSMISSION DEVICE**

(57)   A non-contact electric power transmission and reception system includes an electric power transmission portion (220) provided in an electric power transmission device (200A or 200B), for transmitting electric power to a vehicle in a non-contact manner, an electric power reception portion (110) provided in the vehicle, for receiving electric power from the electric power transmission portion (220) in a non-contact manner, and a control device (240, 300) controlling at least one of the electric power transmission portion (220) and the electric power reception portion (110). The control device (240, 300) carries out control such that electric power is transmitted and received when efficiency in reception in the electric power reception portion, of electric power transmitted from the electric power transmission portion (220) is higher than a threshold value. This threshold value can variably be set for the control device (240, 300). Preferably, the control device sets higher one of a first threshold value determined in correspondence with the electric power transmission device and a second threshold value determined in correspondence with the vehicle as the threshold value.

FIG.7

**Description**

TECHNICAL FIELD

This invention relates to a non-contact electric power transmission and reception system, a vehicle, and an electric power transmission device, and particularly to a non-contact electric power transmission and reception system transmitting and receiving electric power in a non-contact manner to and from a vehicle.

BACKGROUND ART

Japanese Patent Laying-Open No. 2006-345588 (PTD 1) discloses a technique allowing a non-contact power feed device to feed power without lowering in efficiency in spite of displacement in stop position of an electrically powered vehicle.

This non-contact power feed device includes a primary coil electromagnetically coupled to a secondary coil in the electrically powered vehicle, a communication portion obtaining an electric power reception state on a secondary coil side, a power feed state obtaining portion obtaining a power feed state on a primary coil side, an efficiency obtaining portion obtaining efficiency from the power feed state on the primary coil side which was obtained by the power feed state obtaining portion and the electric power reception state on the secondary coil side which was obtained by the communication portion, a positioning portion moving a position of the primary coil so as to maximize efficiency obtained by the efficiency obtaining portion, a retry instruction portion transmitting a retry signal to the secondary coil side through the communication portion when efficiency is equal to or lower than a prescribed value, and a control portion controlling the non-contact power feed device.

CITATION LIST

PATENT DOCUMENT

PTD 1: Japanese Patent Laying-Open No. 2006-345588
PTD 2: Japanese Patent Laying-Open No. 2011-215703

SUMMARY OF INVENTION

TECHNICAL PROBLEM

According to Japanese Patent Laying-Open No. 2006-345588, when electric power reception efficiency is equal to or lower than a prescribed value, retry is made without power feed. Depending on a situation, however, a user of a vehicle may consider to start charging early even though electric power reception efficiency is low to some extent. Achievement of charging in a state desirable for the user of the vehicle or a manager of an electric power transmission device is demanded.

An object of this invention is to provide a non-contact electric power transmission and reception system, a vehicle, and an electric power transmission device, allowing realization of transmission and reception of electric power between a vehicle and an electric power transmission device in a state desirable for a user of the vehicle and a manager of the electric power transmission device.

SOLUTION TO PROBLEM

In summary, this invention is directed to a non-contact electric power transmission and reception system including an electric power transmission portion provided in an electric power transmission device, for transmitting electric power in a non-contact manner to a vehicle, an electric power reception portion provided in the vehicle, for receiving electric power in a non-contact manner from the electric power transmission portion, and a control device controlling at least one of the electric power transmission portion and the electric power reception portion. The control device carries out control such that electric power is transmitted and received when efficiency in reception in the electric power reception portion, of electric power transmitted from the electric power transmission portion is higher than a threshold value, and this threshold value can variably be set.

Preferably, the control device sets higher one of a first threshold value determined in correspondence with the electric power transmission device and a second threshold value determined in correspondence with the vehicle as the threshold value.

In another aspect, this invention is directed to a vehicle including an electric power reception portion for receiving electric power in a non-contact manner from an electric power transmission portion provided in an electric power transmission device and a control device controlling the electric power reception portion. The control device carries out control such that electric power is transmitted and received when efficiency in reception in the electric power reception portion, of electric power transmitted from the electric power transmission portion is higher than a threshold value, and this threshold value can variably be set.

Preferably, the control device sets the threshold value based on an input from a user.

Preferably, the control device sets the threshold value based on information transmitted from the electric power transmission device.

Preferably, the control device sets the threshold value based on information on a location where the electric power transmission device is installed.

Preferably, the control device sets the threshold value based on information on a time period of power feed.

Preferably, when a first threshold value predetermined in correspondence with the electric power transmission device is equal to or greater than a second threshold value predetermined in correspondence with the vehicle, the control device sets the threshold value to be equal to or greater than the first threshold value, and when the first threshold value is smaller than the second threshold value, the control device sets the threshold value to be equal to or greater than the second threshold value.

In yet another aspect, this invention is directed to an electric power transmission device including an electric power transmission portion for transmitting electric power in a non-contact manner to an electric power reception portion of a vehicle and a control device controlling the electric power transmission portion. The control device carries out control such that electric power is transmitted and received when efficiency in reception in the electric power reception portion, of electric power transmitted from the electric power transmission portion is higher than a threshold value, and this threshold value can variably be set.

Preferably, the control device sets the threshold value based on an input from a user.

Preferably, the control device sets the threshold value based on information transmitted from the vehicle.

Preferably, the control device sets the threshold value based on information on a location where the electric power transmission device is installed.

Preferably, the control device sets the threshold value based on information on a time period of power feed.

Preferably, when a first threshold value predetermined in correspondence with the electric power transmission device is equal to or greater than a second threshold value predetermined in correspondence with the vehicle, the control device sets the threshold value to be equal to or greater than the first threshold value, and when the first threshold value is smaller than the second threshold value, the control device sets the threshold value to be equal to or greater than the second threshold value.

ADVANTAGEOUS EFFECTS OF INVENTION

According to the present invention, possibility that power feed to a vehicle in a state desirable for a user of a vehicle or a manager of an electric power transmission device can be enhanced.

BRIEF DESCRIPTION OF DRAWINGS

Fig. 1 is an overall configuration diagram of a non-contact electric power transmission and reception system 10A according to an embodiment of this invention.

Fig. 2 is an overall configuration diagram of a non-contact electric power transmission and reception system 10B according to the embodiment of this invention.

Fig. 3 is a diagram for illustrating principles of electric power transmission using a resonant method.

Fig. 4 is a diagram showing relation between a distance from a current source (magnetic current source) and electromagnetic field intensity.

Fig. 5 is a diagram showing a simulation model of an electric power transmission system.

Fig. 6 is a diagram showing relation between efficiency and deviation in natural frequency between an electric power transmission device and an electric power reception device.

Fig. 7 is a detailed configuration diagram of non-contact electric power transmission and reception system 10B shown in Fig. 2.

Fig. 8 is a flowchart for illustrating control carried out in an electric power transmission device and a vehicle.

Fig. 9 is a diagram for illustrating a first example of position displacement.

Fig. 10 is a diagram for illustrating a second example of position displacement.

Fig. 11 is a flowchart for illustrating one example of processing for setting an electric power reception efficiency determination threshold value performed in steps S3 and S103 in Fig. 8.

Fig. 12 is a flowchart for illustrating processing for setting an electric power reception efficiency determination threshold value performed in steps S3A and S103A which are a variation of steps S3 and S103 in Fig. 11.

DESCRIPTION OF EMBODIMENTS

An embodiment of the present invention will be described hereinafter in detail with reference to the drawings. In the drawings, the same or corresponding elements have the same reference characters allotted and description thereof will not be repeated.

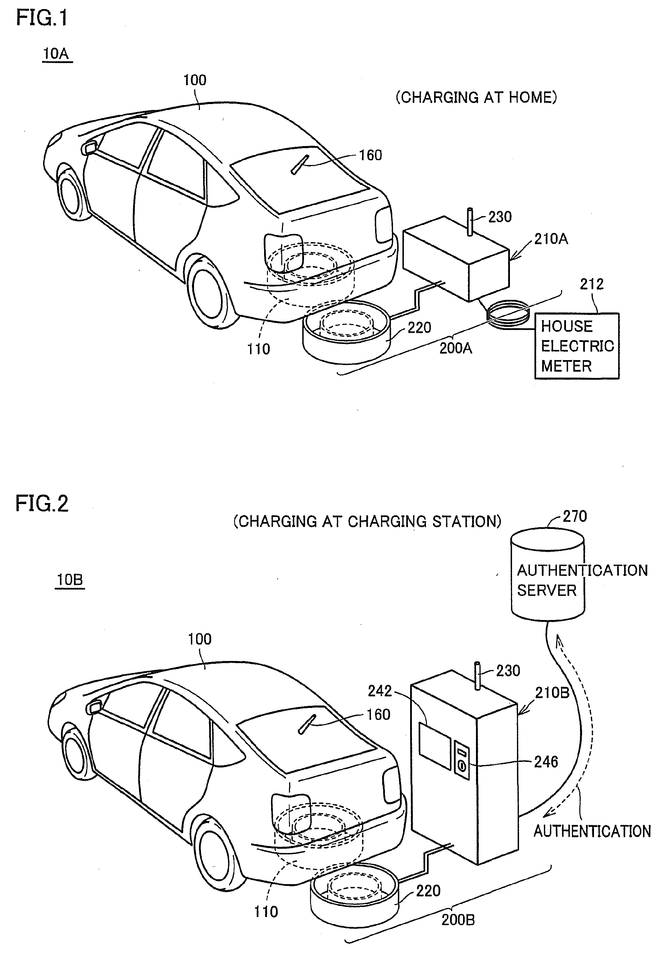

Fig. 1 is an overall configuration diagram of a non-contact electric power transmission and reception system 10A according to an embodiment of this invention. Fig. 1 shows an example in which a battery of a vehicle is charged in a house or the like.

Referring to Fig. 1, non-contact electric power transmission and reception system 10A includes a vehicle 100 and an electric power transmission device 200A. Vehicle 100 includes an electric power reception portion 110 and a communication portion 160. Electric power transmission device 200A includes a high-frequency power supply device 210A, an electric power transmission portion 220, and a communication portion 230.

Electric power reception portion 110 is installed on a bottom surface of a vehicle body and configured to receive in a non-contact manner, electric power sent from electric power transmission portion 220 of electric power transmission device 200A. Specifically, electric power reception portion 110 includes a coil which will be described later (which is hereinafter referred to as a self-resonance coil and may also be called a "resonant coil" or the like as appropriate), and receives electric power from electric power transmission portion 220 in a non-contact manner, by resonation through electromagnetic field with a self-resonance coil included in electric power transmission portion 220. Communication portion 160 is a communication interface for communication between vehicle 100 and electric power transmission device 200A.

High-frequency power supply device 210A converts commercial AC power supplied, for example, through a house electric meter 212 into high-frequency electric power, and outputs the electric power to electric power transmission portion 220.

Electric power transmission portion 220 is installed, for example, on a floor surface of a parking lot, and configured to send in a non-contact manner, high-frequency electric power supplied from high-frequency power supply device 210A to electric power reception portion 110 of vehicle 100. Specifically, electric power transmission portion 220 includes a self-resonance coil and transmits electric power to electric power reception portion 110 in a non-contact manner as this self-resonance coil resonates through electromagnetic field with the self-resonance coil included in electric power reception portion 110. Communication portion 230 is a communication interface for communication between electric power transmission device 200A and vehicle 100.

Fig. 2 is an overall configuration diagram of a non-contact electric power transmission and reception system 10B according to the embodiment of this invention. Fig. 2 shows an example in which a battery of a vehicle is charged at a charging station or the like.

Referring to Fig. 2, non-contact electric power transmission and reception system 10B includes vehicle 100 and an electric power transmission device 200B. Electric power transmission device 200B authenticates a vehicle by referring to vehicle data registered in an authentication server 270. Since vehicle 100 is common to Fig. 1, description of electric power reception portion 110 and the like will not be repeated.

In a case of a shared electric power transmission device as shown in Fig. 2, fees may be charged to a user of a charged vehicle (an owner or a user) for each time of charging. In addition, even in a case that no fee is charged, limitation of a vehicle to be charged may be desired (for example, a case that an electric power transmission device is owned by a company and charging limited to cars owned by the company is desired, a case that a vehicle incompatible with an electric power transmission device is desirably excluded, or the like).

In such a case, in order to identify a user of a vehicle or to identify a vehicle, authentication is carried out by establishing communication between a vehicle and an electric power transmission device. Authentication does not necessarily involve fee charging so long as such identification of a user or a vehicle is carried out. It is noted that authentication may not be carried out when fees are charged after communication.

Electric power transmission device 200B includes a high-frequency power supply device 210B and electric power transmission portion 220. High-frequency power supply device 210B includes a display portion 242, a fee reception portion 246, and communication portion 230. High-frequency power supply device 2110B converts, for example, commercial AC power to high-frequency electric power and outputs high-frequency electric power to electric power transmission portion 220. It is noted that high-frequency power supply device 210B may receive supply of electric power from such a power supply device as a solar power generation device and a wind power generation device.

Since electric power transmission portion 220 is common to the case in Fig. 1, description will not be repeated.

Here, in power feed from electric power transmission device 200A in Fig. 1 or electric power transmission device 200B in Fig. 2 to vehicle 100, vehicle 100 should be guided to around electric power transmission device 200 for registration between electric power reception portion 110 of vehicle 100 and electric power transmission portion 220. Namely, registration of vehicle 100 is not easy. A portable device can be carried with a user's hand and easily placed at an appropriate position of a power feed unit such as a charger. The vehicle, however, should be parked at an appropriate position through an operation of the vehicle by a user, and fine position adjustment is difficult.

With a resonant scheme based on electromagnetic field, relatively high electric power can be transmitted even when a transmission distance is several m. Therefore, in non-contact electric power transmission and reception systems 10A and 10B according to this embodiment, power is fed from electric power transmission device 200A, 200B to vehicle 100 with the resonant scheme.

It is noted that, in the non-contact electric power transmission and reception system according to the present embodiment, a natural frequency of electric power transmission portion 220 and a natural frequency of electric power reception portion 110 are the same.

The "natural frequency of the electric power transmission portion" means an oscillation frequency in a case that an electric circuit including a coil and a capacitor of the electric power transmission portion freely oscillates. It is noted that a natural frequency at the time when braking force or electric resistance is set to zero or substantially zero in an electric circuit including a coil and a capacitor of the electric power transmission portion is called a "resonance frequency of the electric power transmission portion."

Similarly, the "natural frequency of the electric power reception portion" means an oscillation frequency in a case that an electric circuit including a coil and a capacitor of the electric power reception portion freely oscillates. A natural frequency at the time when braking force or electric resistance is set to zero or substantially zero in an electric circuit including a coil and a capacitor of the electric power reception portion is called a "resonance frequency of the electric power reception portion."

The "same natural frequency" herein includes not only a case that the natural frequencies are exactly the same but also a case that natural frequencies are substantially the same. "Substantially the same natural frequency" means that a difference between a natural frequency of the electric power transmission portion and a natural frequency of the electric power reception portion is within ±10% of the natural frequency of the electric power transmission portion or the natural frequency of the electric power reception portion.

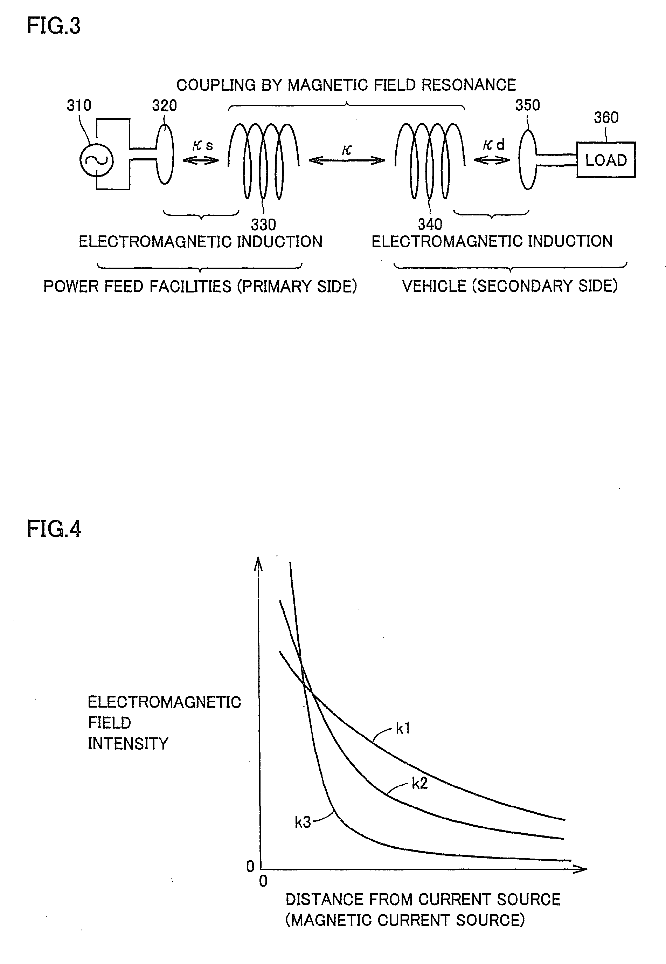

Fig. 3 is a diagram for illustrating principles of electric power transmission using a resonant method.

Referring to Fig. 3, according to this resonant method, two LC resonance coils having the same natural frequency resonate in electromagnetic field (near field) as in resonance of two tuning forks, so that electric power is transmitted from one coil to the other coil through electromagnetic field.

Specifically, a primary coil 320 is connected to a high-frequency power supply 310 and high-frequency electric power is fed to a primary self-resonance coil 330 magnetically coupled to primary coil 320 through electromagnetic induction. Primary self-resonance coil 330 is an LC resonator with an inductance and a stray capacitance of the coil itself and resonates with a secondary self-resonance coil 340, which is the same in resonance frequency as primary self-resonance coil 330, through electromagnetic field (near field). Then, energy (electric power) moves from primary self-resonance coil 330 to secondary self-resonance coil 340 through electromagnetic field. Energy (electric power) that moved to secondary self-resonance coil 340 is extracted by a secondary coil 350 magnetically coupled to secondary self-resonance coil 340 through electromagnetic induction and supplied to a load 360. It is noted that electric power transmission with the resonant method is realized when a Q value indicating intensity of resonance between primary self-resonance coil 330 and secondary self-resonance coil 340 is greater, for example, than 100.

In addition, in the non-contact electric power transmission and reception system according to the present embodiment, by causing the electric power transmission portion and the electric power reception portion to resonate through electromagnetic field, electric power is transmitted from the electric power transmission portion to the electric power reception portion, and a coefficient of coupling ($\kappa$) between the electric power transmission portion and the electric power reception portion is preferably not greater than 0.1. It is noted that a coefficient of coupling ($\kappa$) is not limited to this value and it can take various values at which good electric power transmission is achieved. It is noted that, in electric power transmission generally making use of electromagnetic induction, a coefficient of coupling ($\kappa$) between the electric power transmission portion and the electric power reception portion is close to 1.0.

It is noted that, with regard to correspondence with Figs. 1 and 2, secondary self-resonance coil 340 and secondary coil 350 correspond to electric power reception portion 110 in Fig. 1 and primary coil 320 and primary self-resonance coil 330 correspond to electric power transmission portion 220 in Fig. 1.

It is noted that, in the non-contact electric power transmission and reception system according to the present embodiment as above, by causing the electric power transmission portion and the electric power reception portion to resonate through electromagnetic field, electric power is transmitted from the electric power transmission portion to the electric power reception portion. Coupling between the electric power transmission portion and the electric power reception portion in such electric power transmission is referred to, for example, as "magnetic resonant coupling," "magnetic field resonant coupling," "electromagnetic field resonance coupling," or "electric field resonance coupling."

"Electromagnetic resonance coupling" means coupling including any of "magnetic resonant coupling," "magnetic field resonant coupling," and "electric field resonance coupling."

Since an antenna in a coil shape is adopted for the electric power transmission portion and the electric power reception portion described herein, the electric power transmission portion and the electric power reception portion are coupled to each other mainly through magnetic field, and the electric power transmission portion and the electric power reception portion are in "magnetic resonant coupling" or "magnetic field resonant coupling."

It is noted that, for example, an antenna such as a meandering line can also be adopted for the electric power transmission portion and the electric power reception portion, and in this case, the electric power transmission portion and the electric power reception portion are coupled to each other mainly through electric field. Here, the electric power transmission portion and the electric power reception portion are in "electric field resonance coupling."

Fig. 4 is a diagram showing relation between a distance from a current source (magnetic current source) and electromagnetic field intensity.

Referring to Fig. 4, electromagnetic field includes three components. A curve k1 represents a component inversely proportional to a distance from a wave source and it is referred to as "radiation electromagnetic field." A curve k2 represents a component inversely proportional to a square of a distance from a wave source and it is referred to as "induction electromagnetic field." In addition, a curve k3 represents a component inversely proportional to a cube of a distance from a wave source and it is referred to as "static electromagnetic field."

Here, there is an area where intensity of electromagnetic waves sharply decreases with a distance from the wave source. According to the resonant method, however, energy (electric power) is transmitted by making use of this near field (evanescent field). Namely, a pair of resonators (for example, a pair of LC resonance coils) having the same natural frequency is caused to resonate by making use of the near field, so that energy (electric power) is transmitted from one resonator (primary self-resonance coil) to the other resonator (secondary self-resonance coil). Since this near field does not propagate energy (electric power) over a long distance, the resonant method can achieve electric power transmission with less energy loss than electromagnetic waves transmitting energy (electric power) by means of the "radiation electromagnetic field" propagating energy over a long distance.

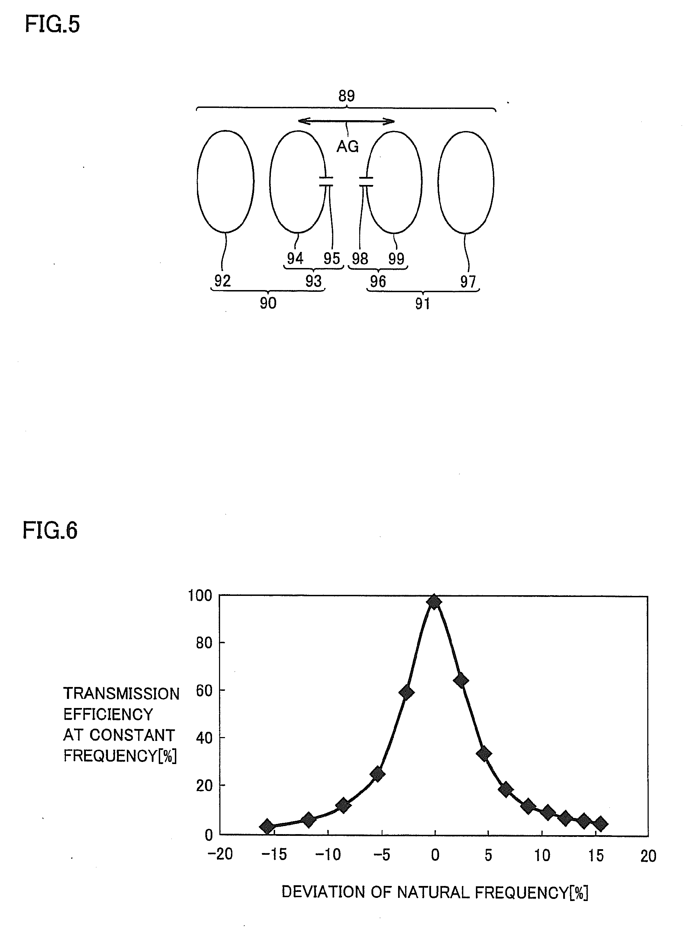

Fig. 5 is a diagram showing a simulation model of an electric power transmission system.

Fig. 6 is a diagram showing relation between efficiency and deviation in natural frequency between an electric power transmission device and an electric power reception device.

Simulation results of analysis of relation between a difference in natural frequency and electric power transmission efficiency will be described with reference to Figs. 5 and 6. An electric power transmission system 89 includes an electric power transmission device 90 and an electric power reception device 91. Electric power transmission device 90 includes an electromagnetic induction coil 92 and an electric power transmission portion 93. Electric power transmission portion 93 includes a resonant coil 94 and a capacitor 95 provided in resonant coil 94.

Electric power reception device 91 includes an electric power reception portion 96 and an electromagnetic induction coil 97. Electric power reception portion 96 includes a resonant coil 99 and a capacitor 98 connected to this resonant coil 99.

An inductance of resonant coil 94 is denoted as an inductance Lt and a capacitance of capacitor 95 is denoted as a capacitance C1. An inductance of resonant coil 99 is denoted as an inductance Lr and a capacitance of capacitor 98 is denoted as a capacitance C2. With setting of each parameter as such, a natural frequency f1 of electric power transmission portion 93 is expressed in an equation (1) below and a natural frequency f2 of electric power reception portion 96 is expressed in an equation (2) below.

$$f1 = 1/\{2\pi(Lt{\times}C1)^{1/2}\} \qquad ... (1)$$

$$f2 = 1/\{2\pi(Lr{\times}C2)^{1/2}\} \qquad ... (2)$$

Here, relation between deviation in natural frequency between electric power transmission portion 93 and electric power reception portion 96 and electric power transmission efficiency in a case that inductance Lr and capacitances C1, C2 are fixed and only inductance Lt is varied is shown in Fig. 3. It is noted that, in this simulation, relative positional relation between resonant coil 94 and resonant coil 99 is fixed and in addition, a frequency of a current supplied to electric power transmission portion 93 is constant.

In the graph shown in Fig. 6, the abscissa represents deviation (%) in natural frequency and the ordinate represents transmission efficiency (%) at a constant frequency. Deviation (%) in natural frequency is expressed in an

equation (3) below.

$$(\text{Deviation in Natural Frequency}) = \{(f1-f2)/f2\} \times 100 \ (\%) \quad ... \ (3)$$

As is clear also from Fig. 6, when deviation (%) in natural frequency is ±0%, electric power transmission efficiency is close to 100%. When deviation (%) in natural frequency is ±5%, electric power transmission efficiency is 40%. When deviation (%) in natural frequency is ±10%, electric power transmission efficiency is 10%. When deviation (%) in natural frequency is ±15%, electric power transmission efficiency is 5%. Namely, it can be seen that electric power transmission efficiency can be enhanced to a practical level by setting a natural frequency of each of the electric power transmission portion and the electric power reception portion such that an absolute value of deviation (%) in natural frequency (difference in natural frequency) is not greater than 10% of the natural frequency of electric power reception portion 96. In addition, electric power transmission efficiency can further be enhanced by setting a natural frequency of each of the electric power transmission portion and the electric power reception portion such that an absolute value of deviation (%) in natural frequency is not higher than 5% of the natural frequency of electric power reception portion 96, which is further preferred. It is noted that electromagnetic field analysis software (JMAG (trademark): manufactured by JSOL Corporation)) is adopted as simulation software.

Even though a scheme higher in tolerance of position displacement like the resonant scheme described above is adopted, higher electric power reception efficiency is obtained as registration proceeds better. Therefore, a reference for determining whether or not electric power reception efficiency is sufficient for completing registration at the time of registration or for starting full-fledged electric power reception (a threshold value for determination of electric power reception efficiency) is necessary.

For example, in a case that an individual user charges a power storage device of a vehicle in an individual house, electric power is supplied from a distribution panelboard at home to the electric power transmission device. In that case, since an electric power company charges fees to the user based on an amount of electric power used by the electric power transmission device (that is, an amount of electric power transmission), the user is likely to desire high electric power reception efficiency in spite of some efforts for registration.

Alternatively, in a case that an individual user charges a power storage device of a vehicle outside the house from a power feed business operator of a charging station or the like, arrangement may be such that fees are charged based not on an amount of electric power transmission but on an amount of electric power received by the vehicle. This is because a pricing system may be difficult for the user to accept, depending on electric power reception efficiency on which a price per a unit electric power amount per a charging amount (hereinafter referred to as an electric power unit price) is dependent. In such a case, the user may not much care electric power reception efficiency but he/she may desire to start charging early without taking time for registration.

Then, in the present embodiment, a vehicle or an electric power transmission device is configured to use a threshold value for determining electric power reception efficiency as the reference for determining whether or not to continue electric power reception and to be able to variably set this threshold value without fixing the same.

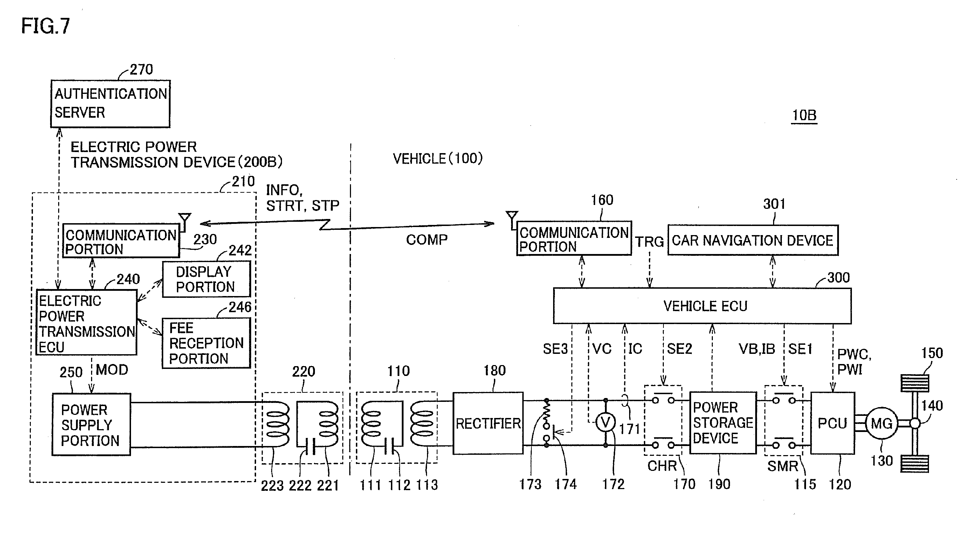

Fig. 7 is a detailed configuration diagram of non-contact electric power transmission and reception system 10B shown in Fig. 2. In connection with non-contact electric power transmission and reception system 10A shown in Fig. 1, since vehicle 100 is common and electric power transmission device 200A is configured similarly to electric power transmission device 200B except for not being provided with authentication server 270 and fee reception portion 246, non-contact electric power transmission and reception system 10B will representatively be described.

Referring to Fig. 7, vehicle 100 includes, in addition to electric power reception portion 110 and communication portion 160, a rectifier 180, a charge relay (CHR) 170, a power storage device 190, a system main relay (SMR) 115, a power control unit PCU 120, a motor generator 130, a motive power transmission gear 140, a drive wheel 150, a vehicle ECU (Electronic Control Unit) 300 representing a control device, a current sensor 171, a voltage sensor 172, and a car navigation device 301. Electric power reception portion 110 includes a secondary self-resonance coil 111, a capacitor 112, and a secondary coil 113.

Though an electric car is described as vehicle 100 by way of example in the present embodiment, a configuration of vehicle 100 is not limited thereto so long as a vehicle can run with electric power stored in a power storage device. Other examples of vehicle 100 include a hybrid vehicle incorporating an engine, a fuel cell car incorporating a fuel cell, and the like.

Secondary self-resonance coil 111 receives electric power through electromagnetic field by means of electromagnetic resonance from a primary self-resonance coil 221 included in electric power transmission device 200B.

The number of turns of this secondary self-resonance coil 111 and a distance between coils are set as appropriate based on a distance from primary self-resonance coil 221 of electric power transmission device 200B, resonant frequencies of primary self-resonance coil 221 and secondary self-resonance coil 111, and the like, such that a Q value indicating intensity of resonance between primary self-resonance coil 221 and secondary self-resonance coil 111 is greater (for example, Q>100) and a coefficient of coupling (κ) indicating a degree of coupling thereof or the like is small (for example, not greater than 0.1).

Capacitor 112 is connected to opposing ends of secondary self-resonance coil 111 and forms an LC resonance circuit together with secondary self-resonance coil 111. A capacitance of capacitor 112 is set as appropriate to achieve a prescribed resonant frequency in accordance with an inductance of secondary self-resonance coil 111. It is noted that, in a case that a desired resonance frequency is obtained with a stray capacitance of secondary self-resonance coil 111 itself, no capacitor 112 may be provided.

Secondary coil 113 is provided coaxially with secondary self-resonance coil 111 and it can magnetically couple to secondary self-resonance coil 111 through electromagnetic induction. This secondary coil 113 extracts electric power received by secondary self-resonance coil 111 through electromagnetic induction and outputs electric power to rectifier 180.

Rectifier 180 rectifies AC power received from secondary coil 113 and outputs rectified DC power to power storage device 190 through CHR 170. Rectifier 180 can be configured, for example, to include a diode bridge and a smoothing capacitor (neither of which is shown). Though what is called a switching regulator which carries out rectification based on switching control can also be employed as rectifier 180, rectifier 180 may also be included in electric power reception portion 110, and in order to prevent malfunction or the like of a switching element involved with generated electromagnetic field, a static rectifier such as a diode bridge is more preferably adopted.

Though the present embodiment is configured such that DC power rectified by rectifier 180 is directly output to power storage device 190, if a rectified DC voltage is different from a charging voltage which can be tolerated by power storage device 190, a DC/DC converter (not shown) for voltage conversion may be provided between rectifier 180 and power storage device 190.

A load resistor 173 and a relay 174 for position detection which are connected in series are connected to an output portion of rectifier 180. After authentication of a vehicle is completed and before full-fledged charging is started, weak electric power is transmitted as a signal for testing from electric power transmission device 200B to the vehicle. Here, relay 174 is controlled by a control signal SE3 from vehicle ECU 300 and rendered conductive.

Voltage sensor 172 is provided between a power line pair connecting rectifier 180 and power storage device 190 to each other. Voltage sensor 172 detects a DC voltage on a secondary side of rectifier 180, that is, a power reception voltage received from electric power transmission device 200B, and outputs a detection value VC to vehicle ECU 300. Vehicle ECU 300 determines electric power reception efficiency based on voltage VC and transmits information on electric power reception efficiency to the electric power transmission device through communication portion 160.

Current sensor 171 is provided in a power line connecting rectifier 180 and power storage device 190 to each other. Current sensor 171 detects a charging current for power storage device 190 and outputs a detection value IC to vehicle ECU 300.

CHR 170 is electrically connected to rectifier 180 and power storage device 190. CHR 170 is controlled by a control signal SE2 from vehicle ECU 300 and switches between supply and cut-off of electric power from rectifier 180 to power storage device 190.

Power storage device 190 is an electric power storage element configured to be chargeable and dischargeable. Power storage device 190 is implemented, for example, by such a secondary battery as a lithium ion battery, a nickel metal hydride battery, or a lead acid battery, or a power storage element such as an electric double layer capacitor.

Power storage device 190 is connected to rectifier 180 with CHR 170 being interposed. Power storage device 190 stores electric power received by electric power reception portion 110 and rectified by rectifier 180. In addition, power storage device 190 is connected also to PCU 120 with SMR 115 being interposed. Power storage device 190 supplies electric power for generating vehicle driving force to PCU 120. Moreover, power storage device 190 stores electric power generated by motor generator 130. Output from power storage device 190 is, for example, around 200 V.

Power storage device 190 is provided with a voltage sensor and a current sensor for detecting a voltage VB and an input and output current IB of power storage device 190, although they are not shown. These detection values are output to vehicle ECU 300. Vehicle ECU 300 calculates a state of charge (also referred to as "SOC") of power storage device 190 based on these voltage VB and current IB.

SMR 115 is interposed in a power line connecting power storage device 190 and PCU 120 to each other. Then, SMR 115 is controlled by a control signal SE1 from vehicle ECU 300 and switches between supply and cut-off of electric power between power storage device 190 and PCU 120.

PCU 120 includes a converter and an inverter, although they are not shown. The converter converts a voltage from power storage device 190 under the control by a control signal PWC from vehicle ECU 300. The inverter drives motor generator 130 with the use of electric power converted by the converter, under the control by a control signal PWI from vehicle ECU 300.

Motor generator 130 is an AC rotating electric machine, and for example, it is a permanent magnet type synchronous motor including a rotor having a permanent magnet embedded.

Output torque of motor generator 130 is transmitted to drive wheel 150 through motive power transmission gear 140 to thereby run vehicle 100. Motor generator 130 can generate electric power with rotational force of drive wheel 150 during a regenerative braking operation of vehicle 100. Then, PCU 120 causes generated electric power to be converted to charging power for power storage device 190.

In a hybrid car incorporating an engine (not shown) in addition to motor generator 130, the engine and motor generator 130 are operated in coordination, so that necessary vehicle driving force is generated. In this case, power storage device 190 can be charged also with electric power generated through rotation of the engine.

As described above, communication portion 160 is a communication interface for wireless communication between vehicle 100 and electric power transmission device 200B. Communication portion 160 outputs to electric power transmission device 200B, battery information INFO including SOC of power storage device 190 from vehicle ECU 300. In addition, communication portion 160 outputs to electric power transmission device 200B, signals STRT, STP indicating start and stop of electric power transmission from electric power transmission device 200B.

Vehicle ECU 300 includes a CPU (Central Processing Unit), a storage device, and an input/output buffer, none of which is shown in Fig. 1, receives input of signals from each sensor and the like and outputs control signals to each device, and controls vehicle 100 and each device. It is noted that such control is not limited to processing by software and processing with dedicated hardware (electronic circuitry) can also be performed.

When vehicle ECU 300 receives a charge start signal TRG resulting from an operation or the like by a user, it outputs signal STRT indicating start of electric power transmission to electric power transmission device 200B through communication portion 160 based on a prescribed condition being satisfied. Alternatively, vehicle ECU 300 outputs signal STP indicating stop of electric power transmission to electric power transmission device 200B through communication portion 160, based on power storage device 190 being fully charged, an operation by a user, or the like.

Electric power transmission device 200B includes high-frequency power supply device 210B and electric power transmission portion 220. High-frequency power supply device 210 further includes, in addition to communication portion 230, an electric power transmission ECU 240 representing a control device, a power supply portion 250, display portion 242, and fee reception portion 246. Furthermore, electric power transmission portion 220 includes primary self-resonance coil 221, a capacitor 222, and a primary coil 223.

Power supply portion 250 is controlled by a control signal MOD from electric power transmission ECU 240 and converts electric power received from an AC power supply such as a commercial power supply to high-frequency electric power. Then, power supply portion 250 supplies resultant high-frequency electric power to primary coil 223.

Though no matching device for impedance conversion is shown in Fig. 7, a configuration may be such that a matching device is provided between power supply portion 250 and electric power transmission portion 220 or between electric power reception portion 110 and rectifier 180.

Primary self-resonance coil 221 transfers electric power by means of electromagnetic resonance to secondary self-resonance coil 111 included in electric power reception portion 110 of vehicle 100.

The number of turns of primary self-resonance coil 221 and a distance between coils are set as appropriate based on a distance from secondary self-resonance coil 111 of vehicle 100, resonant frequencies of primary self-resonance coil 221 and secondary self-resonance coil 111, and the like, such that a Q value indicating intensity of resonance between primary self-resonance coil 221 and secondary self-resonance coil 111 is greater (for example, Q>100) and $\kappa$ indicating a degree of coupling thereof or the like is small (for example, not greater than 0.1).

Capacitor 222 is connected to opposing ends of primary self-resonance coil 221 and forms an LC resonance circuit together with primary self-resonance coil 221. A capacitance of capacitor 222 is set as appropriate to achieve a prescribed resonant frequency in accordance with an inductance of primary self-resonance coil 221. It is noted that, in a case that a desired resonance frequency is obtained with a stray capacitance of primary self-resonance coil 221 itself, no capacitor 222 may be provided.

Primary coil 223 is provided coaxially with primary self-resonance coil 221 and it can magnetically couple to primary self-resonance coil 221 through electromagnetic induction. Primary coil 223 transmits high-frequency electric power supplied through a matching device 260 to primary self-resonance coil 221 through electromagnetic induction.

As described above, communication portion 230 is a communication interface for wireless communication between electric power transmission device 200B and vehicle 100. Communication portion 230 receives battery information INFO transmitted from communication portion 160 on the side of vehicle 100, signals STRT, STP indicating start and stop of electric power transmission, and information on authentication of the vehicle, and outputs such information to electric power transmission ECU 240.

Electric power transmission ECU 240 includes a CPU, a storage device, and an input/output buffer, none of which is shown in Fig. 1, receives input of signals from each sensor and the like and outputs control signals to each device, and controls each device in high-frequency power supply device 210B. It is noted that such control is not limited to processing by software and processing with dedicated hardware (electronic circuitry) can also be performed.

Electric power transmission ECU 240 and vehicle ECU 300 are coordinated with each other through communication portions 160, 230 and carry out control in connection with electric power transmission and reception of the electric power transmission device for the vehicle. When communication is established, whether or not a vehicle is a vehicle adapted to non-contact charging is found.

When non-contact electric power transmission and reception is carried out, registration between the electric power reception portion on the vehicle side and the electric power transmission portion on the electric power transmission device side is important. In the electric power transmission and reception system in the present embodiment, electric power transmitted from the electric power transmission portion and received by the electric power reception portion is used for registration between the electric power transmission portion and the electric power reception portion.

When a vehicle with which communication has been established is a vehicle adapted to non-contact charging, for registration, electric power transmission portion 240 causes power supply portion 250 to transmit a test signal with the use of prescribed electric power. Prescribed electric power should only be electric power with which efficiency in electric power transmission and reception can be checked, however, preferably, weak electric power is used. It is noted that weak electric power includes electric power lower than electric power during full-fledged electric power transmission (such as charging power for charging a battery or driving power for driving such a load as an air conditioner mounted on a vehicle). Weak electric power is electric power which is transmitted for registration and it may include intermittently transmitted electric power.

In order to receive a test signal, vehicle ECU 300 transmits control signals SE2, SE3 so as to set relay 174 to an ON state and set CHR 170 to an OFF state. Then, electric power received in electric power reception portion 110 is detected by voltage sensor 172 on the vehicle side, and electric power reception efficiency is calculated based on voltage VC. Vehicle ECU 300 transmits electric power reception efficiency to electric power transmission device 200B through communication portion 160. A position of a vehicle is adjusted based on voltage VC, such that electric power reception efficiency exceeds a threshold value for electric power reception efficiency for determining whether electric power reception or charging is appropriate or not, it is to be continued/suspended, or it is to be permitted/prohibited (hereinafter referred to as an electric power reception efficiency determination threshold value).

A position of a vehicle may be adjusted by a driver operating and moving the vehicle, or a position of a vehicle may be adjusted by using a parking assistance system such that the vehicle automatically moves.

After the position of the vehicle is determined and it is confirmed that there is no problem in electric power reception efficiency, authentication is carried out in order to identify a vehicle or to identify a charger. Authentication is carried out by checking authentication information transmitted from vehicle 100 via communication portions 160, 230 to electric power transmission device 200B with authentication server 270. After completion of authentication, fees are charged to a user of the vehicle for subsequent charging power. Transmission to the user of information such as electric power reception efficiency or an electric power unit price prior to authentication is more preferred.

Display portion 242 of electric power transmission device 200B displays to the user, electric power reception efficiency and a unit price for an amount of charging power corresponding thereto (for example, a unit price for electric power such as X yen/kWh). Display portion 242 also has a function as an input portion like a touch panel, and can accept input of whether or not the user approves electric power reception efficiency and an electric power unit price corresponding thereto.

Instead of or in addition to display on display portion 242 of electric power transmission device 200B, more preferably, these are displayed on a screen provided in a driver's seat or the like of vehicle 100, and user approval data is directly transmitted from the vehicle to electric power transmission ECU 240.

When an electric power unit price is approved, electric power transmission ECU 240 causes power supply portion 250 to start full-fledged charging after authentication is carried out. Then, when charging is completed, the fees are paid through fee reception portion 246.

Fee charging is based on information on an approved vehicle, however, if cash, a prepaid card, a credit card, or the like is inserted in fee reception portion 246 before charging, the fees may be paid by the same.

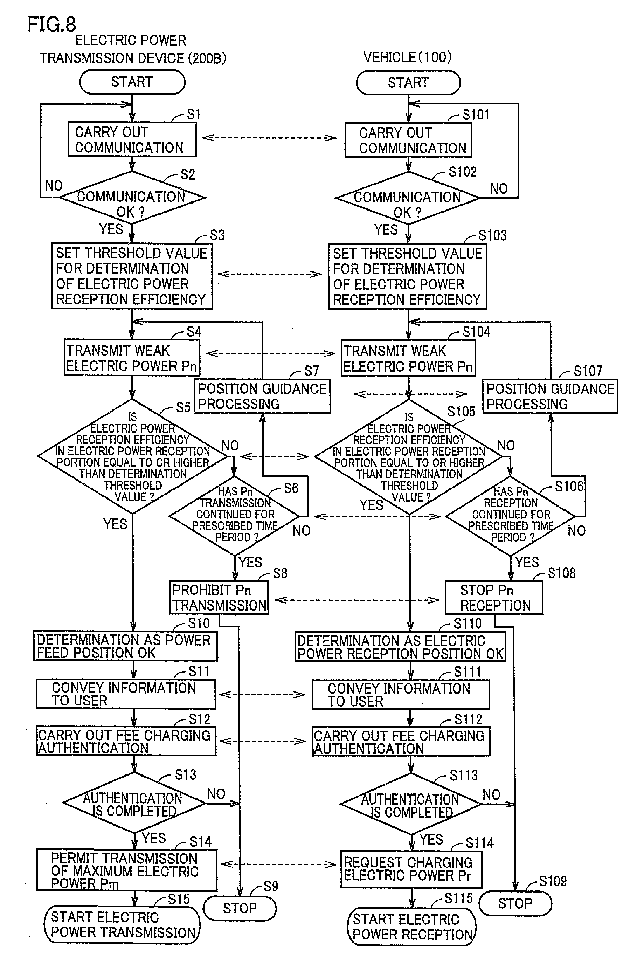

Fig. 8 is a flowchart for illustrating control carried out in the electric power transmission device and the vehicle.

Referring to Figs. 7 and 8, when the process is started, initially in step S1, in electric power transmission device 200B, electric power transmission ECU 240 communicates with the vehicle by using communication portion 230. In addition, in step S101, in vehicle 100, vehicle ECU 300 communicates with the electric power transmission device by using communication portion 160.

In electric power transmission device 200B, in step S2, electric power transmission ECU 240 determines whether or not communication has been established. When communication has not been established, the process returns to step S1.

On the other hand, in vehicle 100, in step S102, electric power transmission ECU 240 determines whether or not communication has been established. When communication has not been established, the process returns to step S101. It is noted that this determination of establishment of communication should only be made in at least any one of vehicle ECU 300 and electric power transmission ECU 240, and a result of determination may be transferred to the other through communication.

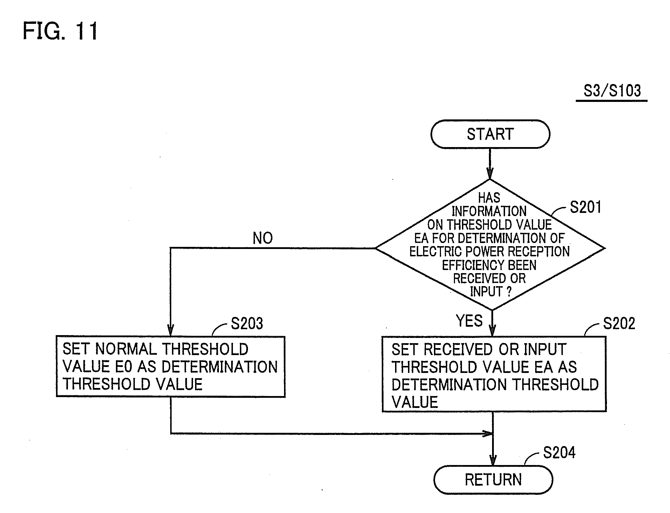

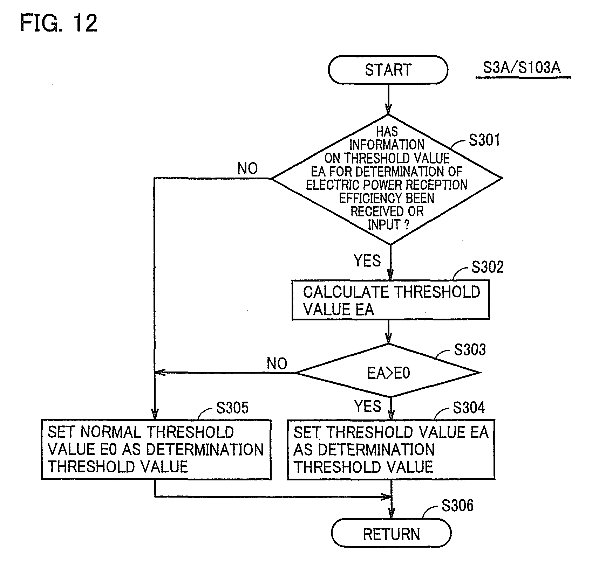

When it is determined in step S2, step S102 that communication has been established, the process proceeds to step S3, step S103. In step S3, step S103, processing for setting an electric power reception efficiency determination threshold value is performed. This processing for setting a threshold value will be described later with reference to Figs. 11 and 12.

In succession, in step S104, vehicle ECU 300 requests through communication portions 160, 230, electric power transmission ECU 240 for transmission of prescribed electric power. Prescribed electric power should only be electric power with which efficiency in electric power transmission and reception can be checked. In the present embodiment, transmission of weak electric power Pn is requested as prescribed electric power by way of a preferred example. In response to this request, in step S4, electric power transmission ECU 240 instructs power supply portion 250 to transmit weak electric power. Then, as electric power transmission portion 220 is fed with power, weak electric power is transmitted in a non-contact manner to electric power reception portion 110 of the vehicle.

It is noted that prescribed electric power transmitted in step S4 is lower than maximum electric power Pm of which transmission is subsequently permitted in step S12 and it preferably is not higher than one tenth in magnitude.

In transmission of a weak current, prior thereto, vehicle ECU 300 turns on relay 174. Then, this weak electric power is received by electric power reception portion 110, a voltage of received electric power is detected by voltage sensor 172, and the detected voltage is compared with a prescribed threshold voltage, so that whether or not a distance between the electric power transmission portion and the electric power reception portion is within a prescribed distance is determined. The threshold voltage used here corresponds to the electric power reception efficiency determination threshold value set in step S3 or S103. It is noted that this determination processing may be performed in vehicle ECU 300 or electric power transmission ECU 240. In addition, individual determination may be made in vehicle ECU 300 and electric power transmission ECU 240, and final determination may be made through communication of those results.

Alternatively, electric power reception efficiency may be determined based on something other than a voltage detected by voltage sensor 172 (for example, a current, electric power, or the like). Alternatively, determination may be based on electric power with which power storage device 190 was charged or on efficiency in charging of power storage device 190, without using resistor 173 or relay 174.

In a case that determination is made by vehicle ECU 300, a value detected by a voltage sensor 127 and the electric power reception efficiency determination threshold value are compared with each other in step S105, and results of determination are transmitted to electric power transmission ECU 240 through communication portions 160, 230.

Alternatively, in a case that determination is made by electric power transmission ECU 240, a value detected by voltage sensor 127 is transmitted through communication portions 160, 230 to electric power transmission ECU 240 in step S5, and the detection value and the electric power reception efficiency determination threshold value are compared with each other in electric power transmission ECU 240.

It is noted that, in any case of making determination in vehicle ECU 300 and making determination in electric power transmission ECU 240, current electric power reception efficiency and an electric power reception efficiency determination threshold value may be displayed next to each other, for example, such that a driver can visually recognize them on a navigation screen in the vehicle. Alternatively, current electric power reception efficiency itself displayed on the navigation screen may be displayed as varied based on change in threshold value. (For example, in a case that electric power reception efficiency is displayed and charging is permitted if electric power reception efficiency is not lower than 90% or a level 4, a display value of electric power reception efficiency is set based on an electric power reception efficiency determination threshold value. When an electric power reception efficiency determination threshold value is high while real electric power reception efficiency is 80%, a display value of 70% may be displayed, and when an electric power reception efficiency determination threshold value is low, a display value of 95% may be displayed.)

When it is determined in step S5 that efficiency in reception in electric power reception portion 110, of electric power transmitted from electric power transmission portion 220 is not equal to or higher than an electric power reception efficiency determination threshold value, the process proceeds to step S6 and whether or not transmission of weak electric power Pn has continued for a prescribed period of time is determined.

On the other hand, when it is determined in step S105 that efficiency in reception in electric power reception portion 110, of electric power transmitted from electric power transmission portion 220 is not equal to or higher than an electric power reception efficiency determination threshold value, the process proceeds to step S106 and whether or not transmission of weak electric power Pn has continued for a prescribed period of time is determined.

Determination of duration of transmission or reception in step S6 or step S106 is made in at least any one of electric power transmission ECU 240 and vehicle ECU 300, and a result should only be transferred to the other ECU through communication. The upper limit of a duration of transmission or reception is set to a very short period of time (such as within 1 hour).

When a time period of transmission of weak electric power Pn has not reached the prescribed period of time in step S6, the process proceeds to step S7 and processing for position guidance of a parking position of the vehicle is performed. Then, the process returns to step S4 and transmission of weak electric power Pn is continued. Alternatively, when a time period of reception of week electric power Pn has not reached the prescribed period of time in step S106, the process proceeds to step S107 and processing for position guidance of a parking position of the vehicle is performed.

Then, the process returns to step S4 and reception of weak electric power Pn is continued.

While transmission and reception of weak electric power Pn is continued as such, the user of the vehicle carries out registration by moving a vehicle position based on the position guidance processing in step S7 or S107. In the position guidance processing, whether or not there is a position displacement amount, increase or decrease in position displacement amount, a direction of travel of the vehicle, or the like is shown to a driver of the vehicle.

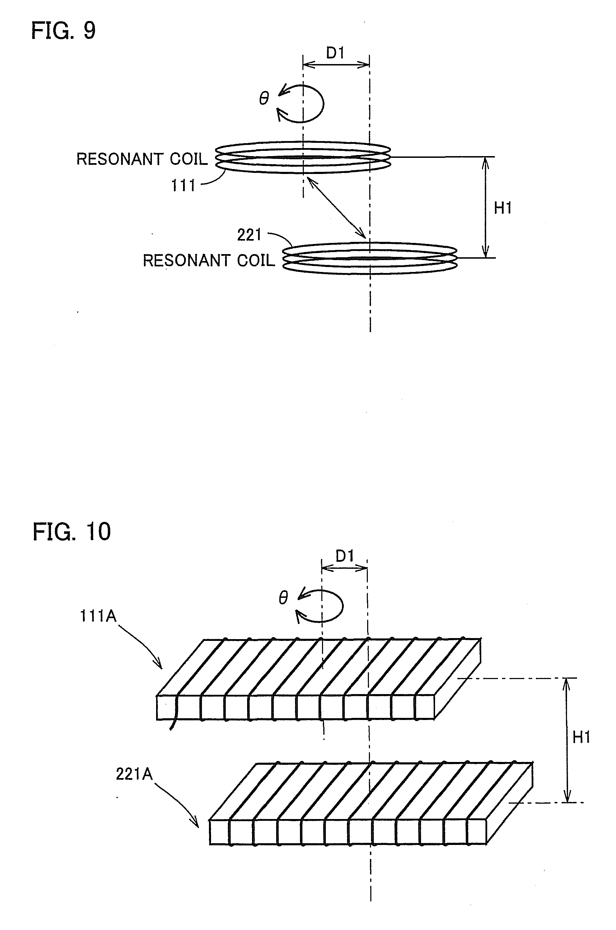

Fig. 9 is a diagram for illustrating a first example of position displacement. Referring to Fig. 9, electric power reception efficiency varies depending on a horizontal position displacement amount D1 between resonant coil 111 of the electric power reception portion and resonant coil 221 of the electric power transmission portion, an amount of displacement from an appropriate vertical position H1, or an amount of displacement in a rotation direction θ.

Fig. 10 is a diagram for illustrating a second example of position displacement. Referring to Fig. 10, electric power reception efficiency varies depending on horizontal position displacement amount D1 between a resonant coil 111A of the electric power reception portion and a resonant coil 221A of the electric power transmission portion, an amount of displacement from appropriate vertical position H1, or an amount of displacement in rotation direction θ.

Electric power reception efficiency is preferably maximized by setting such an amount of displacement to an optimal value. It is noted that this registration may be carried out by automatic running including automatic steering.

Referring again to Fig. 8, when a time period of transmission of weak electric power Pn has reached the prescribed period of time in step S6, the process proceeds to step S8 and transmission of weak electric power Pn is prohibited. Alternatively, when a time period of reception of weak electric power Pn has reached the prescribed period of time in step S106, the process proceeds to step S108 and reception of weak electric power Pn is stopped. The prescribed period of time is a time period serving as a threshold value for determining time up. Such a case means that registration has not been completed in time, and determination as time up is made.

For example, it is also possible that a long period of time elapses without registration while weak electric power is transmitted. In such a case, by stopping electric power transmission after lapse of a prescribed period of time, power consumption in the electric power transmission device can be reduced. In addition, transmission of electric power before fee charging also to a vehicle of which registration is not carried out intentionally can be prevented from being continued.

A transmission prohibition instruction or a reception stop instruction in step S8 or step S108 is given by at least any one of electric power transmission ECU 240 and vehicle ECU 300, and a result should only be transferred to the other ECU through communication.

After processing for transmission prohibition and reception stop is performed in step S8, step S108, the processing for electric power transmission and reception is stopped in step S9, step S109.

On the other hand, when it is determined in step S5 in electric power transmission device 200B that efficiency in reception in electric power reception portion 110, of electric power transmitted from electric power transmission portion 220 is equal to or higher than the determination threshold value, the process proceeds to step S10. In step S10, determination that the position of the vehicle is good as a power feed position is certified.

Similarly, in vehicle 100 as well, when it is determined in step S105 that efficiency in reception in electric power reception portion 110, of electric power transmitted from electric power transmission portion 220 is equal to or higher than the determination threshold value, the process proceeds to step S110. In step S110, determination that the position of the vehicle is good as an electric power reception position is certified.

Then, in step S 11 and/or step S111, processing for conveying information to the user is performed. This information includes a status of electric power reception (electric power reception efficiency or a value associated with the electric power reception efficiency), an electric power reception unit price, or the like. Regarding a method of conveying information to the user, the information may be displayed on a liquid crystal screen provided in the vehicle or voice and sound may be used. Alternatively, information may be displayed on a screen provided in the electric power transmission device or notification through voice and sound may be given from the electric power transmission device.

Registration using weak electric power is thus completed through the process above. In succession, the user determines whether or not to carry out charging, based on the information conveyed to the user. For example, when electric power reception efficiency is lower than expected, the user may determine that compatibility between that charging station and the vehicle is bad and charging may not be carried out. Such a case is not completion of authentication in step S 13 and step S113, and hence charging processing stops in step S9, step S109. Thus, electric power transmission and reception not in accordance with the user's intention can be avoided.

On the other hand, when the user selects charging, necessary vehicle information is checked with data in authentication server 270. When the vehicle is a vehicle of which charging is permitted, authentication is completed in step S 13 and step S 113.

When authentication is completed, electric power transmission device 200B permits transmission of maximum electric power Pm in step S 14. Then, in step S114, vehicle ECU 300 requests charging power Pr to electric power transmission device 200B. When requested charging power Pr is not higher than maximum electric power Pm, electric power as requested is transmitted from electric power transmission device 200B to vehicle 100.

Then, in step S 15, electric power transmission device 200B starts electric power transmission, and in step S115, vehicle 100 starts electric power reception.

Fig. 11 is a flowchart for illustrating one example of processing for setting an electric power reception efficiency determination threshold value performed in steps S3 and S103 in Fig. 8.

Referring to Fig. 11, as the process is started, initially in step S201, whether or not information on a threshold value EA has been received or input is determined.

When information on threshold value EA was not received or input in step S201, the process proceeds to step S203, and a normal threshold value E0 set in advance in the vehicle or the electric power transmission device is set as the electric power reception efficiency determination threshold value. On the other hand, when information on threshold value EA has been received or input in step S201, the process proceeds to step S202, and received or input threshold value EA is set as the electric power reception efficiency determination threshold value.

For example, input through a "home" button provided in a vehicle is exemplified as information input in step S201. More specifically, a case that a driver parks a car while he/she designates being at home with the "home" button in the vehicle or a case that being at home can be designated by using the "home" button after a "charge" button provided in the vehicle was pressed is exemplified. It is noted that a button designating being another location such as a "charging station" other than the "home" button may be used to designate a location of charging.

The reason for designating a location as such is because there is a possibility that a condition for fee charging is different from place to place. For example, at home, fees are charged based on an amount of electric power transmitted by the electric power transmission device, whereas at a commercial charging station, there is also a possibility that fees are charged based on an amount of electric power with which a vehicle is charged. In such a case, a user of a vehicle takes time at home for parking registration for efficient charging, however, he/she does not wish to take time for parking registration at a commercial charging station because he/she desires early start of charging. Therefore, depending on a location of charging, there may be a case that change in electric power reception efficiency threshold value for determination of start of charging is more advantageous.

It is noted that whether a position of a vehicle at the time when a charge button was pressed is either at home or at a charging station may be determined with the use of a car navigation device and the vehicle ECU may set an electric power reception efficiency determination threshold value in accordance with that location.

Alternatively, electric power reception efficiency may be determined based on efficiency in charging of power storage device 190. Information on an electric power reception threshold value may be exemplified by "electric power reception efficiency (or electric power reception efficiency) 80% or higher," "X hours or less until full charge," "registration 90% or higher," and the like. Alternatively, an artificial value such as "electric power reception levels (or charge levels) 1 to 5" may be used to designate electric power reception efficiency.

The processing as above may be performed on the electric power transmission device side, without being limited to the vehicle side. For example, the electric power transmission device may change such an electric power reception efficiency determination threshold value depending on a location of installation. In such a case, by inputting information on a location where the electric power transmission device is installed such as whether the electric power transmission device has been installed at home or at a commercial or shared charging station at the time of installation of the electric power transmission device, an ECU of the electric power transmission device may set a corresponding electric power reception efficiency determination threshold value. It is noted that an electric power reception efficiency determination threshold value may be set based on information on a time period of power feed (such as a scheduled time period for charging being set to 1 hour), in addition to the information on a location of installation.

Though a case that information in step S201 is input through a button or the like has been described, the vehicle may receive information from the electric power transmission device and then set an electric power reception efficiency determination threshold value, or the electric power transmission device may receive information from the vehicle and then set an electric power reception efficiency determination threshold value.

Information on an electric power reception efficiency threshold value transmitted from the electric power transmission device may be changed depending on a vehicle to be charged. For example, in a certain facility, a vehicle of an employee may be set to be higher in electric power reception efficiency determination threshold value than a vehicle of a visitor.

Fig. 12 is a flowchart for illustrating processing for setting an electric power reception efficiency determination threshold value performed in steps S3A and S103A which are a variation of steps S3 and S103 in Fig. 11.

Referring to Fig. 12, as the process is started, initially in step S301, whether or not information on threshold value EA has been received or input is determined. For example, input through a "home" button provided in a vehicle is exemplified as such information. More specifically, a case that a user of a vehicle parks a car while he/she designates being at home with the "home" button in the vehicle or a case that being at home can be designated by using the "home" button after a "charge" button provided in the vehicle was pressed is exemplified. It is noted that a button designating being another location such as a "charging station" other than the "home" button may be used to designate a location.

Since the reason for designating a location as such is the same as in the case of Fig. 11, description will not be repeated.

When information on threshold value EA was not received or input in step S301, the process proceeds to step S305 and normal threshold value E0 set in advance in the vehicle or the electric power transmission device is set as the electric power reception efficiency determination threshold value.

On the other hand, when information on threshold value EA has been received or input in step S301, the process proceeds to step S302 and threshold value EA is calculated from received or input contents. Then, which of normal threshold value E0 and threshold value EA is greater and smaller is determined in step S303.

When relation of EA>E0 is satisfied in step S303, the process proceeds to step S304, and when relation as such is not satisfied, the process proceeds to step S305. When the process proceeds to step S304, an electric power reception efficiency determination threshold value is set to threshold value EA. Alternatively, when the process proceeds to step S305, the processing is set to normal threshold value E0.

When a determination threshold value is set in step S304 or S305, the process proceeds to step S306 and control returns to the flowchart in Fig. 8.

A case that the vehicle has normal threshold value E0 and threshold value EA determined based on an input from the user was very small in Fig. 12 is considered. For example, a case that a commercial facility where charging can be carried out while shopping sets a small threshold value for attracting shoppers is possible. This is because, if high electric power reception efficiency is set, accuracy in registration is required and it takes time for parking, and hence, for example, there may be a possibility that customers may be discouraged to go there or a parking lot is congested.

If electric power reception efficiency is too low, however, an amount of charging per hour decreases and hence the user of the vehicle also would like to avoid incomplete charging while shopping. Therefore, by adopting higher electric power reception efficiency as shown in the flowchart in Fig. 12, such a situation that an amount of charging is small in spite of lapse of a long period of time can be avoided.

It is noted that there may be a case that lower one of an electric power reception efficiency determination threshold value of a vehicle and an electric power reception efficiency determination threshold value of an electric power transmission device is adopted. For example, it is assumed that threshold value EA used only when fees are charged to a user of a vehicle is set in the vehicle and a threshold value EB (EB<EA) is set in an electric power transmission device. If fees are charged to a power feed business operator in a case of charging by using this electric power transmission device, threshold value EA is not adopted. Therefore, even though relation of EB<EA is apparently satisfied, EB is adopted as a determination threshold value. Thus, some electric power reception threshold values are set depending on to whom fees are charged, and an electric power reception threshold value may be selected as appropriate depending on a situation.

Finally, referring again to the drawings, the present embodiment will be summarized. The non-contact electric power transmission and reception system in the present embodiment includes electric power transmission portion 220 provided in electric power transmission device 200A or 200B, for transmitting electric power to a vehicle in a non-contact manner, electric power reception portion 110 provided in the vehicle, for receiving electric power from electric power transmission portion 220 in a non-contact manner, and a control device (electric power transmission ECU 240, vehicle ECU 300) controlling at least one of electric power transmission portion 220 and electric power reception portion 110. The control device carries out control such that electric power is transmitted and received when efficiency in reception in the electric power reception portion, of electric power transmitted from electric power transmission portion 220 is higher than a threshold value. This threshold value can variably be set for electric power transmission ECU 240, vehicle ECU 300.

This "threshold value" can include a threshold value for enabling a user to input an instruction to start charging, a threshold value for automatic start of charging, a threshold value for not permitting start of charging in spite of a user's instruction to start charging in a case that efficiency is lower than a threshold value, and the like. By allowing variable setting of a threshold value, charging in a state more desirable to the user or a manager of a charging facility can be achieved.

Preferably, the control device sets higher one of a first threshold value determined in correspondence with electric power transmission device 200A or 200B and a second threshold value determined in correspondence with vehicle 100 as the threshold value. In this case, electric power reception efficiency may be compared with both of the first threshold value and the second threshold value, or the first threshold value and the second threshold value may be compared with each other so that higher one of them is determined as a threshold value to be used and then this threshold value and electric power reception efficiency may be compared with each other.

It is noted that electric power reception efficiency may be determined based on charging efficiency, because efficiency in charging of power storage device 190 also varies in accordance with electric power reception efficiency.

In general, fees for electric power based on an amount of power feed are charged to a user of a vehicle or a power feed business operator. If fees for electric power are charged to the user of the vehicle, the user of the vehicle sets a high electric power reception efficiency determination threshold value, so that reception of electric power in spite of poor electric power reception efficiency and fee charging comparably expensive with respect to an amount of charging can be avoided. Alternatively, the user of the vehicle sets a low electric power reception efficiency determination threshold value, so that electric power can be received in spite of electric power reception efficiency low to some extent and hence demand of a user of a vehicle who wishes to shorten a time period required for parking can also be met.

In a case that fees for electric power are charged to a power feed business operator, the power feed business operator sets a high electric power reception efficiency determination threshold value, so that reception of electric power in spite of poor electric power reception efficiency and fee charging comparably expensive with respect to an amount of charging can be avoided. Alternatively, the power feed business operator sets a low electric power reception efficiency determination threshold value, so that electric power can be received in spite of electric power reception efficiency low to some extent and hence demand of a user of a vehicle who wishes to shorten a time period required for parking can also be met.

Permission is given after threshold values on both of the vehicle side and the power feed facility side are exceeded, so that proper (acceptable) fee charging can be made to whomever fees may be charged for electric power based on an amount of power feed.

In another aspect, this invention is directed to vehicle 100 including electric power reception portion 110 for receiving electric power in a non-contact manner from electric power transmission portion 220 provided in electric power transmission device 200A or 200B and a control device (vehicle ECU 300) controlling electric power reception portion 110. The control device (vehicle ECU 300) carries out control (S14, S114 in Fig. 8) such that electric power is transmitted and received when efficiency in reception in electric power reception portion 110, of electric power transmitted from electric power transmission portion 220 is higher than a threshold value (YES in S105 in Fig. 8). This threshold value can variably be set.

"Carrying out control such that electric power is transmitted and received" includes not only giving permission to continue transmission and reception of electric power for charging by making determination of efficiency based on a threshold value after transmission and reception of electric power for testing but also start of transmission and reception of electric power for charging in a case that electric power reception efficiency estimated without involving transmission and reception of electric power is higher than the threshold value. In addition, "carrying out control such that electric power is transmitted and received" includes both of a case that charging is permitted if only electric power reception efficiency exceeds an electric power reception efficiency threshold value on the vehicle side and a case that electric power reception efficiency exceeding an electric power reception efficiency threshold value on the vehicle side is one condition for permission of charging and for example, charging is not permitted as a charging system unless an electric power reception efficiency threshold value on a power feed facility side is exceeded.

Preferably, the control device (vehicle ECU 300) sets the threshold value based on an input from a user.

Preferably, the control device (vehicle ECU 300) sets the threshold value based on information transmitted from the electric power transmission device.

Preferably, the control device (vehicle ECU 300) sets the threshold value based on information on a location where electric power transmission device 200A or 200B is installed. The "information on a location ... installed" includes information on a location such as whether the location is at home or at a charging station.

Preferably, the control device (vehicle ECU 300) sets the threshold value based on information on a time period of power feed of electric power transmission device 200A or 200B. The "information on a time period of power feed" includes time information such as in how many hours charging will end or desire to charge during midnight electric power hours. If electric power reception efficiency is low, a long period of time is required for charging. Therefore, when a long period of time cannot be given for charging, a high threshold value in electric power reception efficiency may be set, and when a long period of time can be given for charging, a low threshold value may be set. Alternatively, when charging during hours when cost for charging is inexpensive has been designated, a low threshold value may be set.

More preferably, information transmitted from electric power transmission device 200A or 200B includes a first threshold value predetermined in correspondence with electric power transmission device 200A or 200B. The control device (vehicle ECU 300) stores a second threshold value predetermined in correspondence with vehicle 100. When the first threshold value predetermined in correspondence with electric power transmission device 200A or 200B is equal to or greater than the second threshold value predetermined in correspondence with vehicle 100, the control device (vehicle ECU 300) sets the threshold value to be equal to or greater than the first threshold value, and when the first threshold value is smaller than the second threshold value, it sets the threshold value to be equal to or greater than the second threshold value.

Namely, the control device (vehicle ECU 300) sets a threshold value to be used based on the first threshold value and the second threshold value. In this case, when a threshold value corresponding to requested electric power reception efficiency based on information on an electric power reception threshold value on a power feed facility side (first threshold value) is smaller than a threshold value corresponding to requested electric power reception efficiency on the vehicle 100 side (second threshold value), the threshold value corresponding to requested electric power reception efficiency on the vehicle 100 side (second threshold value) may continually be used. "Setting the threshold value to be equal to or greater than the second threshold value" includes also continual use of the second threshold value.

By thus setting the threshold value, such a situation that a long period of time is required for charging if charging is permitted in spite of a very low threshold value designated from the electric power transmission device side as in a case that a threshold value for efficiency on the vehicle side is completely dependent on information on a threshold value on the electric power transmission device side can be avoided.

Preferably, the control device (vehicle ECU 300) carries out control for guidance of position of a vehicle so as to obtain electric power reception efficiency not lower than a set threshold value. It is noted that position guidance includes also facilitating recognition by a driver of enhancement and lowering in electric power reception efficiency through variation in sound or a display picture when electric power reception efficiency exceeds the threshold value. Alternatively, position guidance may be achieved by a parking assistance system for automatic steering or the like.

Preferably, a difference in natural frequency between electric power transmission portion 220 of electric power transmission device 200A or 200B and electric power reception portion 110 of vehicle 100 is within $\pm 10\%$.

Preferably, a coefficient of coupling between electric power reception portion 110 and electric power transmission portion 220 of electric power transmission device 200A or 200B is not greater than 0.1.

Preferably, electric power reception portion 110 receives electric power from electric power transmission portion 220 of electric power transmission device 200A or 200B through at least one of magnetic field formed between electric power reception portion 110 and electric power transmission portion 220 and oscillating at a specific frequency and electric field formed between the electric power reception portion and the electric power transmission portion and oscillating at a specific frequency.

It is noted that a threshold value for electric power reception efficiency indicated by transmission information or stored information does not have to strictly be applied in the present embodiment, and setting may be made with a margin in the vehicle or the electric power transmission device such that charging is permitted in consideration of some variation or the like if electric power reception efficiency approximately reaches the threshold value. Electric power reception efficiency and a set threshold value do not have to directly be compared with each other, and comparison may be made based on a parameter associated therewith, or electric power reception efficiency and a threshold value may indirectly be compared with each other with various operations or the like being interposed. For example, various values such as an amount of horizontal position displacement between the electric power transmission portion and the electric power reception portion, a vertical distance, and an angle of rotation can be used as parameters associated with electric power reception efficiency.

Though an example in which a threshold value is set before parking guidance has been shown in the present embodiment, a threshold value for electric power reception efficiency may be set after parking.

Though a case that an electromagnetic induction coil is included in an electric power transmission unit and an electric power reception unit has been exemplified in the present embodiment, the present invention is applicable also to a case that any one or both of the electric power transmission unit and the electric power reception unit includes no electromagnetic induction coil (a case that only a self-resonance coil is employed).

Specifically, on a side of electric power transmission device 200B in Fig. 7 (or electric power transmission device 200A in Fig. 1), power supply portion 250 may directly be connected to resonant coil 221 without providing electromagnetic induction coil 223. In addition, on the vehicle 100 side, rectifier 180 may directly be connected to resonant coil 111 without providing electromagnetic induction coil 113.

Though description has been given in the present embodiment above by way of example of charging, the present invention is applicable also to a case that received electric power is used for applications other than charging. For example, a similar effect is obtained even in a case that such a load as auxiliary machinery of a vehicle is driven with received electric power.

Though an example in which non-contact power feed is carried out with a resonant scheme has been described in detail in the present embodiment, the present embodiment can be applied as modified even to other schemes of the resonant scheme. So long as a scheme uses efficiency in electric power reception from an electric power transmission device for registration, it is applicable also to other schemes of the resonant scheme (for example, a non-contact electric power transmission and reception scheme using electromagnetic induction, microwaves or the like).

It should be understood that the embodiment disclosed herein is illustrative and non-restrictive in every respect. The scope of the present invention is defined by the terms of the claims, rather than the description above, and is intended to include any modifications within the scope and meaning equivalent to the terms of the claims.

REFERENCE SIGNS LIST

10A, 10B non-contact electric power transmission and reception system; 89 electric power transmission system; 90, 200A, 200B electric power transmission device; 91 electric power reception device; 92, 97, 113, 223 electromagnetic induction coil; 93, 220, 240 electric power transmission portion; 94, 99, 111, 111A, 221, 221A resonant coil (self-resonance coil); 95, 98 capacitor; 96, 110 electric power reception portion; 100 vehicle; 112, 222 capacitor; 113 secondary coil; 127, 172 voltage sensor; 130 motor generator; 140 motive power transmission gear; 150 drive wheel; 160, 230 communication portion; 171 current sensor; 173 load resistor; 174 relay; 180 rectifier; 190 power storage device; 210A, 210B high-frequency power supply device; 212 house electric meter; 223 primary coil; 240 electric power transmission ECU; 242 display portion; 246 fee reception portion; 250 power supply portion; 260 matching device; 270 authentication server; 300 vehicle ECU; 301 car navigation device; 310 high-frequency power supply; 360 load; and PCU power control unit.

**Claims**

1. A non-contact electric power transmission and reception system, comprising:

    an electric power transmission portion (220) provided in an electric power transmission device, for transmitting electric power in a non-contact manner to a vehicle;
    an electric power reception portion (110) provided in said vehicle, for receiving electric power in a non-contact manner from said electric power transmission portion; and
    a control device (240, 300) controlling at least one of said electric power transmission portion and said electric power reception portion,
    said control device carrying out control such that electric power is transmitted and received when efficiency in reception in said electric power reception portion, of electric power transmitted from said electric power transmission portion is higher than a threshold value, and
    said threshold value being variably set.

2. The non-contact electric power transmission and reception system according to claim 1, wherein said control device sets higher one of a first threshold value determined in correspondence with said electric power transmission device and a second threshold value determined in correspondence with said vehicle as said threshold value.

3. A vehicle, comprising:

    an electric power reception portion (110) for receiving electric power in a non-contact manner from an electric power transmission portion (220) provided in an electric power transmission device; and
    a control device (300) controlling said electric power reception portion,
    said control device carrying out control such that electric power is transmitted and received when efficiency in reception in said electric power reception portion, of electric power transmitted from said electric power transmission portion is higher than a threshold value, and
    said threshold value being variably set.

4. The vehicle according to claim 3, wherein said control device sets said threshold value based on an input from a user.

5. The vehicle according to claim 3, wherein said control device sets said threshold value based on information transmitted from said electric power transmission device.

6. The vehicle according to claim 3, wherein said control device sets said threshold value based on information on a location where said electric power transmission device is installed.

7. The vehicle according to claim 3, wherein said control device sets said threshold value based on information on a time period of power feed.

8. The vehicle according to claim 3, wherein when a first threshold value predetermined in correspondence with said electric power transmission device is equal to or greater than a second threshold value predetermined in correspondence with said vehicle, said control device sets said threshold value to be equal to or greater than said first threshold value, and when said first threshold value is smaller than said second threshold value, said control device sets said threshold value to be equal to or greater than said second threshold value.

9. An electric power transmission device, comprising:

an electric power transmission portion (220) for transmitting electric power in a non-contact manner to an electric power reception portion (110) of a vehicle; and
a control device (240) controlling said electric power transmission portion,
said control device carrying out control such that electric power is transmitted and received when efficiency in reception in said electric power reception portion, of electric power transmitted from said electric power transmission portion is higher than a threshold value, and
said threshold value being variably set.

10. The electric power transmission device according to claim 9, wherein
said control device sets said tlreshold value based on an input from a user.

11. The electric power transmission device according to claim 9, wherein
said control device sets said threshold value based on information transmitted from said vehicle.

12. The electric power transmission device according to claim 9, wherein
said control device sets said threshold value based on information on a location where said electric power transmission device is installed.

13. The electric power transmission device according to claim 9, wherein
said control device sets said threshold value based on information on a time period of power feed.

14. The electric power transmission device according to claim 9, wherein
when a first threshold value predetermined in correspondence with said electric power transmission device is equal to or greater than a second threshold value predetermined in correspondence with said vehicle, said control device sets said threshold value to be equal to or greater than said first threshold value, and when said first threshold value is smaller than said second threshold value, said control device sets said threshold value to be equal to or greater than said second threshold value.

FIG.1

10A

100

(CHARGING AT HOME)

160

230

210A

212

110

220

200A

HOUSE
ELECTRIC
METER

FIG.2

10B

(CHARGING AT CHARGING STATION)

270

AUTHENTICATION
SERVER

100

160

230

242

210B

246

100

110

220

200B

AUTHENTICATION

FIG.3

COUPLING BY MAGNETIC FIELD RESONANCE

310    320                                              350    360

$\kappa$ s ⟷    $\kappa$ ⟷    $\kappa$ d ⟷    LOAD

330                340
ELECTROMAGNETIC INDUCTION        ELECTROMAGNETIC INDUCTION

POWER FEED FACILITIES (PRIMARY SIDE)    VEHICLE (SECONDARY SIDE)

FIG.4

ELECTROMAGNETIC
FIELD
INTENSITY

k1

k2

k3

0

0

DISTANCE FROM CURRENT SOURCE
(MAGNETIC CURRENT SOURCE)

FIG.5

FIG.6

DEVIATION OF NATURAL FREQUENCY[%]

## FIG.7

AUTHENTICATION SERVER 270

ELECTRIC POWER TRANSMISSION DEVICE (200B)

VEHICLE (100)

10B

COMMUNICATION PORTION 210

230

INFO, STRT, STP

COMMUNICATION PORTION 160

CAR NAVIGATION DEVICE 301

COMP

TRG

DISPLAY PORTION 242

ELECTRIC POWER TRANSMISSION ECU 240

FEE RECEPTION PORTION 246

VEHICLE ECU 300

SE3   VC   IC   SE2   VB,IB   SE1   PWC, PWI

POWER SUPPLY PORTION 250   MOD

220

110

RECTIFIER 180

POWER STORAGE DEVICE

PCU

MG

150

140

130

223 222 221   111 112 113   173 174 172   CHR 170 190   SMR 115 120

171

EP 2 793 354 A1

# FIG.8

ELECTRIC POWER TRANSMISSION DEVICE (200B)

- START
- S1 CARRY OUT COMMUNICATION
- S2 COMMUNICATION OK ? — NO (loop back)
- YES
- S3 SET THRESHOLD VALUE FOR DETERMINATION OF ELECTRIC POWER RECEPTION EFFICIENCY
- S4 TRANSMIT WEAK ELECTRIC POWER Pn
- S5 IS ELECTRIC POWER RECEPTION EFFICIENCY IN ELECTRIC POWER RECEPTION PORTION EQUAL TO OR HIGHER THAN DETERMINATION THRESHOLD VALUE ? — NO
- S6 HAS Pn TRANSMISSION CONTINUED FOR PRESCRIBED TIME PERIOD ? — NO
- S7 POSITION GUIDANCE PROCESSING
- YES → S8 PROHIBIT Pn TRANSMISSION
- S10 DETERMINATION AS POWER FEED POSITION OK
- S11 CONVEY INFORMATION TO USER
- S12 CARRY OUT FEE CHARGING AUTHENTICATION
- S13 AUTHENTICATION IS COMPLETED — NO
- YES S14 PERMIT TRANSMISSION OF MAXIMUM ELECTRIC POWER Pm
- S15 START ELECTRIC POWER TRANSMISSION
- S9 STOP

VEHICLE (100)

- START
- S101 CARRY OUT COMMUNICATION
- S102 COMMUNICATION OK ? — NO (loop back)
- YES
- S103 SET THRESHOLD VALUE FOR DETERMINATION OF ELECTRIC POWER RECEPTION EFFICIENCY
- S104 TRANSMIT WEAK ELECTRIC POWER Pn
- S105 IS ELECTRIC POWER RECEPTION EFFICIENCY IN ELECTRIC POWER RECEPTION PORTION EQUAL TO OR HIGHER THAN DETERMINATION THRESHOLD VALUE ? — NO
- S106 HAS Pn RECEPTION CONTINUED FOR PRESCRIBED TIME PERIOD ? — NO
- S107 POSITION GUIDANCE PROCESSING
- YES → S108 STOP Pn RECEPTION
- S110 DETERMINATION AS ELECTRIC POWER RECEPTION POSITION OK
- S111 CONVEY INFORMATION TO USER
- S112 CARRY OUT FEE CHARGING AUTHENTICATION
- S113 AUTHENTICATION IS COMPLETED — NO
- YES S114 REQUEST CHARGING ELECTRIC POWER Pr
- S115 START ELECTRIC POWER RECEPTION
- S109 STOP

FIG. 9

FIG. 10

FIG. 11

S3/S103

START

HAS INFORMATION ON THRESHOLD VALUE EA FOR DETERMINATION OF ELECTRIC POWER RECEPTION EFFICIENCY BEEN RECEIVED OR INPUT ? — S201

NO

YES

SET NORMAL THRESHOLD VALUE E0 AS DETERMINATION THRESHOLD VALUE — S203

SET RECEIVED OR INPUT THRESHOLD VALUE EA AS DETERMINATION THRESHOLD VALUE — S202

RETURN — S204

FIG. 12

S3A/S103A

START

HAS INFORMATION ON THRESHOLD VALUE EA FOR DETERMINATION OF ELECTRIC POWER RECEPTION EFFICIENCY BEEN RECEIVED OR INPUT ?  — S301

NO

YES

CALCULATE THRESHOLD VALUE EA  — S302

$EA > E0$  — S303

NO

YES

SET NORMAL THRESHOLD VALUE E0 AS DETERMINATION THRESHOLD VALUE  — S305

SET THRESHOLD VALUE EA AS DETERMINATION THRESHOLD VALUE  — S304

RETURN  — S306

## INTERNATIONAL SEARCH REPORT

International application No.

PCT/JP2011/078659

### A. CLASSIFICATION OF SUBJECT MATTER
*H02J17/00*(2006.01)i

According to International Patent Classification (IPC) or to both national classification and IPC

### B. FIELDS SEARCHED

Minimum documentation searched (classification system followed by classification symbols)
H02J17/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2010-172184 A  (Aisin AW Co., Ltd.),<br>05 August 2010 (05.08.2010),<br>paragraphs [0046], [0075] to [0082]; fig. 1 to 2, 7<br>& US 2010/0161216 A1    & EP 2199141 A1<br>& CN 101764435 A | 1,3-4,6-7<br>9-10,12-13<br>2,5,8,11,14 |
| Y | JP 2010-252497 A  (Fujitsu Ten Ltd.),<br>04 November 2010 (04.11.2010),<br>paragraphs [0028] to [0046]; fig. 1 to 3<br>(Family: none) | 9-10,12-13 |
| A | JP 2010-246348 A  (Fujitsu Ten Ltd.),<br>28 October 2010 (28.10.2010),<br>entire text; all drawings<br>(Family: none) | 1-14 |

☐ Further documents are listed in the continuation of Box C.　　☐ See patent family annex.

| | |
|---|---|
| *　　Special categories of cited documents:<br>"A"　document defining the general state of the art which is not considered to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| | |
|---|---|
| Date of the actual completion of the international search<br>　30 July, 2012 (30.07.12) | Date of mailing of the international search report<br>　07 August, 2012 (07.08.12) |
| Name and mailing address of the ISA/<br>　Japanese Patent Office | Authorized officer |
| Facsimile No. | Telephone No. |

Form PCT/ISA/210 (second sheet) (July 2009)

**EP 2 793 354 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006345588 A
- JP 2011215703 A